(19) **Europäisches Patentamt / European Patent Office / Office européen des brevets**

(11) **EP 2 575 277 A2**

(12) # EUROPEAN PATENT APPLICATION

(43) Date of publication:
**03.04.2013 Bulletin 2013/14**

(51) Int Cl.:
**H04J 14/02** (2006.01)

(21) Application number: **12179190.9**

(22) Date of filing: **03.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 JP 2011218397**

(71) Applicant: **FUJITSU LIMITED**
**Kawasaki-shi,**
**Kanagawa 211-8588 (JP)**

(72) Inventors:
• **Kato, Tomoyuki**
  **Kanagawa, 211-8588 (JP)**
• **Watanabe, Shigeki**
  **Kanagawa, 211-8588 (JP)**

(74) Representative: **HOFFMANN EITLE**
**Patent- und Rechtsanwälte**
**Arabellastrasse 4**
**81925 München (DE)**

(54) **Optical reception apparatus and optical network system**

(57)   An optical apparatus includes a dispersing medium configured to receive carrier light which has been subjected to phase modulation in accordance with sub-carrier modulation signals which has been modulated using data signals, and an extracting means configured to extract the data signals from light output from the dispersing medium.

FIG. 1

**EP 2 575 277 A2**

**Description**

FIELD

The embodiments discussed herein are related to an optical apparatus which receives carrier light including multiplexed information and an optical network system.

BACKGROUND

In general, a WDM (Wavelength Division Multiplexing) is used as a technique of transmitting information in an optically multiplexed manner. In the WDM, light signals having different wavelengths are multiplexed and information is transmitted using the wavelengths in a single optical fiber.

Optical networks in the future are based on existing optical communication systems, and an add/drop operation, a switching operation, and the like are performed by an apparatus located far from a terminal apparatus such as a relay optical node. When a transmission is performed in such an optical network, it is efficient to transmit and process information after performing minimum conversion between optical signals and electric signals in terms of energy efficiency.

However, existing relay optical nodes or the like such as terminal apparatuses perform signal processing using optical-electrical conversion. For example, a terminal apparatus temporarily converts supplied signal light into an electric signal, electrically processes the electric signal, and thereafter, converts the electric signal so as to obtain a light signal again. Therefore, a configuration of the apparatus is complicated and a large amount of power is consumed for the optical-electrical conversion.

Here, in an optical network, a variety of information is monitored in real time in various portions and network control is efficiently performed on the basis of the information. In the future optical network, an amount of information is increased and realization of an optical network with reduced power consumption is effective. Furthermore, in order to realize a flexible optical network, a function of inserting information into the network at arbitrary portions including optical nodes is effective.

However, under existing conditions, insertion of information is performed by an optical node apparatus and a terminal apparatus, and particularly, monitor information is transmitted by performing optical-electrical conversion on signal light so that the monitor information is written in a header of the signal light or transmitted using a dedicated light wave.

Note that, as a relay station which is installed between a transmission station and a reception station through an optical transmission path and which uses phase conjugate light has been proposed (refer to Japanese Patent No. 3436310, for example). The relay station includes a phase-conjugate-light generation device which includes a signal-light/excitation-light supplying unit which supplies input signal light and excitation light supplied from the transmission station to a nonlinear optical medium and a signal-light/phase-conjugate-light extracting unit which extracts output signal light and phase conjugate light generated by the input signal light and the excitation light supplied to the nonlinear optical medium, and includes a modulator which modulates the excitation light using monitor data unique to the relay station. Furthermore, the relay station transmits the phase conjugate light including modulated monitor data to the reception station.

As a method for transmitting high-density data by the WDM, optical frequency division multiplexing transmission is considered. In the optical frequency division multiplexing transmission, subcarrier signals are modulated using data signals to be transmitted through a transmission path, the modulated subcarrier signals are subjected to frequency division multiplexing so as to obtain a single carrier wave, and the data signals are transmitted using the carrier wave.

However, there arises a problem in that, in the optical frequency division multiplexing transmission, high-accuracy wavelength control is requested to obtain data signals by performing phase modulation and frequency division multiplexing on carrier light.

SUMMARY

Accordingly, it is desirable to provide an optical apparatus which obtains data signals without performing high-accuracy wavelength control and an optical network system.

According to an aspect of the embodiments, an optical apparatus includes a dispersing medium configured to receive carrier light which has been subjected to phase modulation in accordance with subcarrier modulation signals which has been modulated using data signals, and an extracting means configured to extract the data signals from light output from the dispersing medium.

BRIEF DESCRIPTION OF DRAWINGS

FIG. 1 is a diagram illustrating an optical reception apparatus according to a first embodiment.

FIG. 2 is a diagram illustrating an optical network system according to a second embodiment.

FIG. 3 is a diagram illustrating operation of the optical network system.

FIG. 4 is a block diagram illustrating an optical multiplexing apparatus.

FIG. 5 is a diagram illustrating an optical reception apparatus which performs data demodulation using optical heterodyne detection.

FIG. 6 is a diagram illustrating an optical reception apparatus including an optical filter.

FIG. 7A is a diagram illustrating an optical reception apparatus including an optical wavelength demultiplexer.

FIGs. 7B to 7E are diagrams illustrating configurations of the wavelength demultiplexer of FIG. 7A.

FIG. 8 is a diagram illustrating an optical reception apparatus illustrated in FIG. 2.

FIG. 9 is a diagram illustrating operation of the optical reception apparatus of FIG. 8.

FIG. 10 is a diagram illustrating an optical reception apparatus according to a third embodiment.

FIG. 11 is a diagram illustrating an optical up-converter employing a dispersing medium which is similar to the optical reception apparatus.

FIG. 12 is a block diagram illustrating a chirpless signal generation apparatus employing the optical up-converter of FIG. 11.

DESCRIPTION OF EMBODIMENTS

Hereinafter, embodiments will be described with reference to the accompanying drawings.

First Embodiment

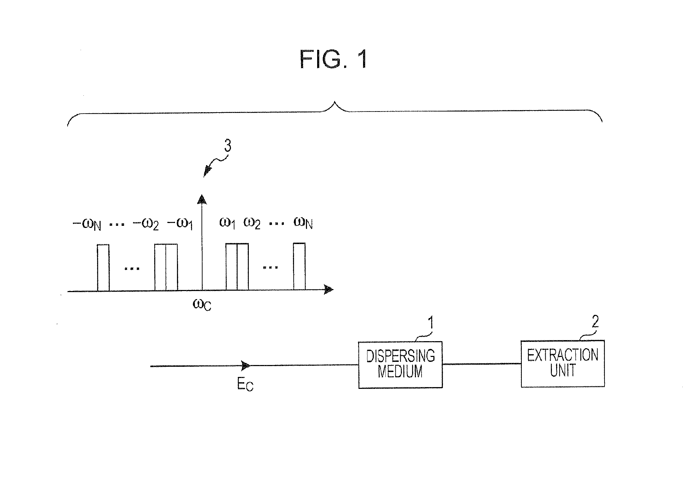

FIG. 1 is a diagram illustrating an optical reception apparatus according to a first embodiment. As illustrated in FIG. 1, the optical reception apparatus includes a dispersing medium 1 and a signal extractor 2.

FIG. 1 also illustrates a spectrum 3 of carrier light $E_C$ to be input to the dispersing medium 1. An axis of abscissa represents a frequency and an axis of ordinate represents power. A reference character $\omega_c$ of the spectrum 3 represents an optical frequency of the carrier light $E_C$. On this specification, $\omega_c$ may be hereinafter called $\omega_0$. The signal extractor 2 may be a wavelength selective switch which extracts the frequency $\omega_c$ and at least desired one of frequencies including and frequencies $\omega_1$ to $\omega_N$. A signal extractor extracts the frequency $\omega_c$ and at least desired one of frequencies including the frequencies $\omega_1$ to $\omega_N$ using an AWG and an optical filter in combination, or a cyclic filter which extracts the frequency $\omega_c$ and at least desired one of the frequencies including the frequencies $\omega_1$ to $\omega_N$. Note that, when optical signals are extracted from the frequencies $\omega_1$ to $\omega_N$, at least one of converted electric signals corresponding to the frequencies $\omega_1$ to $\omega_N$ may be extracted.

A data signal of the carrier light $E_C$ is subjected to frequency division multiplexing performed by optical multiplexing apparatuses installed in a transmission path, for example. The carrier light $E_C$ is subjected to phase modulation in accordance with a subcarrier modulation signal modulated by the data signal and the data signal is multiplexed.

For example, it is assumed that optical multiplexing apparatuses 11 to 1N are installed in a transmission path. The optical multiplexing apparatus 11 modulates a subcarrier signal having a subcarrier frequency $\omega_1$ using a data signal transmitted through the transmission path. The optical multiplexing apparatus 11 generates an optical subcarrier modulation signal having a light intensity corresponding to the subcarrier signal which has been modulated using the data signal (subcarrier modulation signal). The optical multiplexing apparatus 11 multiplexes the generated optical subcarrier modulation signal with the carrier light $E_C$ which is transmitted through the transmission path and performs phase modulation on the carrier light $E_C$ using a nonlinear optical medium provided in the transmission path. By this, in the carrier light $E_C$, the data signal of the subcarrier frequency $\omega_1$ is multiplexed as represented by the spectrum 3.

Furthermore, the optical multiplexing apparatus 12 modulates a subcarrier signal having a subcarrier frequency $\omega_2$ using a data signal supplied through the transmission path. The optical multiplexing apparatus 12 generates an optical subcarrier modulation signal having a light intensity corresponding to a subcarrier modulation signal which has been modulated using the data signal. The optical multiplexing apparatus 12 multiplexes the generated optical subcarrier modulation signal with the carrier light $E_C$ which is transmitted through the transmission path and performs phase modulation on the carrier light $E_C$ using the nonlinear optical medium provided in the transmission path. By this, in the carrier light $E_C$, the data signal of the subcarrier frequency $\omega_2$ is multiplexed as represented by the spectrum 3.

Similarly, the optical multiplexing apparatus 1N modulates a subcarrier signal having a subcarrier frequency $\omega_N$ using a data signal supplied through the transmission path. The optical multiplexing apparatus 1N generates an optical subcarrier modulation signal having a light intensity corresponding to a subcarrier modulation signal which has been modulated using the data signal. The optical multiplexing apparatus 1N multiplexes the generated optical subcarrier modulation signal with the carrier light $E_C$ which is transmitted through the transmission path and performs phase modulation on the carrier light $E_C$ in a nonlinear optical medium provided in the transmission path. By this, in the carrier light $E_C$, a data signal of the subcarrier frequency $\omega_N$ is multiplexed as represented by the spectrum 3.

The carrier light $E_C$ which has been subjected to the phase modulation in accordance with the subcarrier modulation signals is input to the dispersing medium 1. For example, the carrier light $E_C$ which has been subjected to the phase modulation using the N subcarrier modulation signals described above is input to the dispersing medium 1.

The carrier light $E_C$ which passes through the dispersing medium 1 is input to the signal extractor 2. The signal extractor 2 extracts data signals which are multiplexed with the carrier light $E_C$ from the carrier light $E_C$ which has been transmitted through the dispersing medium 1. For example, the signal extractor 2 performs optical-electrical conversion and a demodulation process on light output from the dispersing medium 1 so as to obtain data signals.

Here, examples of a method for obtaining data signals from carrier light $E_C$ which has not been transmitted through the dispersing medium 1 include optical heterodyne detection. In the optical heterodyne detection, local light having an optical frequency different from that of the carrier light $E_C$ is multiplexed with the carrier light $E_C$ so that data signals are obtained. However, in the optical heterodyne detection, a wavelength of the local light is controlled with high accuracy to separate the data signals from the carrier light $E_C$.

Furthermore, a method for removing frequency components of frequencies $-\omega_1$, to $-\omega_N$ included in the spectrum 3 from the carrier light $E_C$ using an optical filter and performing optical-electrical conversion on the light so that data signals are obtained is considered, for example. In this method, an optical filter which has a high-performance box-shaped wavelength transmission characteristic for efficiently attenuating power of the frequencies $-\omega_1$ to $-\omega_N$ while power of the frequencies $\omega_1$ to $\omega_N$, are not attenuated is used.

On the other hand, in the optical reception apparatus illustrated in FIG. 1, data signals are extracted from the carrier light $E_C$ which has been transmitted through the dispersing medium 1. In this case, although described hereinafter, the signal extractor 2 obtains data signals which have been multiplexed with the carrier light $E_C$ without multiplexing the carrier light $E_C$ with local light and without supplying the carrier light $E_C$ to an optical filter. Specifically, the optical reception apparatus illustrated in FIG. 1 obtains a data signal without performing high-accuracy wavelength control.

As described above, in the optical reception apparatus, the carrier light $E_C$ which has been subjected to the phase modulation in accordance with the subcarrier modulation signals modulated using the data signals is input to the dispersing medium 1. Then, in the optical reception apparatus, data which has been multiplexed with the carrier light $E_C$ is extracted from the light output from the dispersing medium 1. Accordingly, the optical reception apparatus may obtain the data signals without performing high-accuracy wavelength control.

Second Embodiment

Next, a second embodiment will be described in detail with reference to the accompanying drawings.

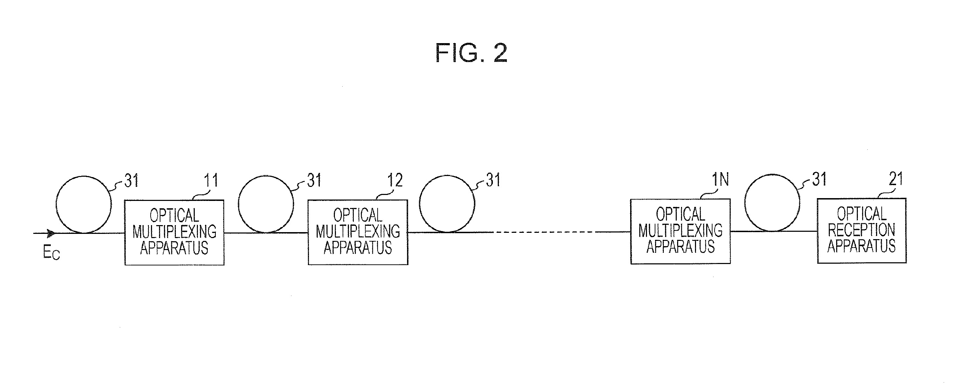

FIG. 2 is a diagram illustrating an optical network system according to the second embodiment. As illustrated in FIG. 2, the optical network system includes optical multiplexing apparatuses 11 to 1N, an optical reception apparatus 21, and a transmission path 31. The transmission path 31 is an optical fiber, for example. Carrier light $E_C$ is transmitted through the transmission path 31.

The carrier light $E_C$ is CW (Continuous Wave) light. Alternatively, the carrier light $E_C$ is signal light which has been subjected to baseband modulation. It is assumed that a bit rate of the signal light which has been subjected to the baseband modulation is sufficiently lower than that of a frequency of a optical subcarrier modulation signal (frequency of light intensity) which will be described hereinafter. In FIG. 2, the number of optical multiplexing apparatuses 11 to 1N is N.

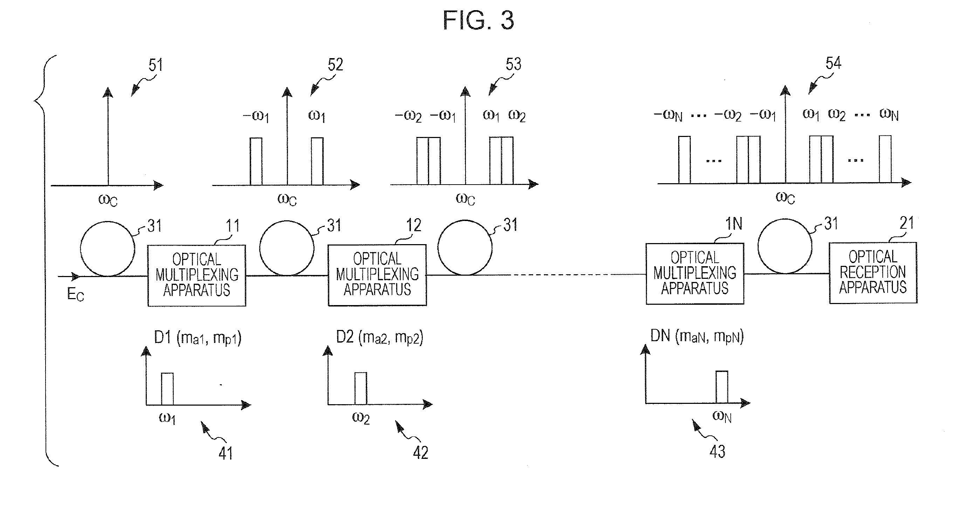

FIG. 3 is a diagram illustrating operation of the optical network system. In FIG. 3, components the same as those illustrated in FIG. 2 are denoted by reference numerals the same as those illustrated in FIG. 2, and descriptions thereof are omitted. Each of the optical multiplexing apparatuses 11 to 1N multiplexes a data signal transmitted through the transmission path 31 with the carrier light $E_C$ in a frequency division multiplexing manner. Reference characters D1 to DN illustrated in FIG. 3 represent data signals multiplexed with the carrier light $E_C$ by the optical multiplexing apparatuses 11 to 1N. For example, a data signal D1 is multiplexed with the carrier light $E_C$ by the optical multiplexing apparatus 11. A data signal D2 is multiplexed with the carrier light $E_C$ by the optical multiplexing apparatus 12. Similarly, a data signal DN is multiplexed with the carrier light $E_C$ by the optical multiplexing apparatus 1N.

The optical multiplexing apparatuses 11 to 1N modulate different subcarrier signals having the different sub-carrier frequencies $\omega_1$ to $\omega_N$ using the data signals D1 to DN. For example, the optical multiplexing apparatus 11 modulates a subcarrier signal having the subcarrier frequency $\omega_1$ using the data signal D1. The optical multiplexing apparatus 12 modulates a subcarrier signal having the subcarrier frequency $\omega_2$ using the data signal D2. Similarly, the optical multiplexing apparatus 1N modulates a subcarrier signal having the subcarrier frequency $\omega_N$ using the data signal DN.

Reference characters $m_{a1}$ to $m_{aN}$ represent amplitude modulation components of the subcarrier signals modulated using the data signals D1 to DN. Reference characters $m_{p1}$ to $m_{pN}$ represent phase modulation components of the subcarrier signals modulated using the data signals D1 to DN.

In FIG. 3, spectra 41 to 43 of the subcarrier signals modulated using the data signals D1 to DN (subcarrier modulation signals) are illustrated. The spectrum 41 represents a spectrum of a subcarrier modulation signal having the subcarrier frequency $\omega_1$ which has been modulated using the data signal D1. The spectrum 42 represents a spectrum of a subcarrier modulation signal having the subcarrier frequency $\omega_2$ which has been modulated using the data signal D2. The spectrum 43 represents a spectrum of a subcarrier modulation signal having the subcarrier frequency $\omega_N$ which has been modulated using the data signal DN. An axis of abscissa represents a frequency and an axis of ordinate represents power.

In FIG. 3, spectra 51 to 54 of the carrier light $E_C$ which is transmitted through the transmission path 31 are illustrated. The spectrum 51 represents a spectrum of the carrier light $E_C$ input to the optical multiplexing apparatus 11. The spectrum 52 represents a spectrum of the carrier light $E_C$ output from the optical multiplexing apparatus 11. The spectrum 53 represents a spectrum of the carrier light $E_C$ output from the optical multiplexing apparatus 12. The spectrum 54 represents a spectrum of the carrier light $E_C$ output from the optical multiplexing apparatus 1N. An axis of abscissa represents a frequency and an axis of ordinate represents power. A reference character $\omega_C$ represents an optical frequency of the carrier light $E_C$.

The optical multiplexing apparatuses 11 to 1N multiplex the carrier light $E_C$ transmitted through the transmission path 31 with the data signals D1 to DN. Although described in detail hereinafter, each of the optical multiplexing apparatuses 11 to 1N generates an optical subcarrier modulation signal having a light intensity corresponding to the subcarrier modulation signal obtained through modulation using a corresponding one of the data signals D1 to DN and multiplexes the generated optical subcarrier modulation signal with the carrier light $E_C$ transmitted through the transmission path 31. The carrier light $E_C$ with which the optical subcarrier modulation signals are multiplexed is subjected to phase modulation by a nonlinear optical medium installed in the transmission path 31 and the data signals D1 to DN are multiplexed with the carrier light $E_C$.

For example, carrier light $E_C$ having an optical frequency $\omega_C$ is input to the optical multiplexing apparatus 11 as represented by the spectrum 51. The optical multiplexing apparatus 11 multiplexes the subcarrier modulation signal having the subcarrier frequency $\omega_1$ modulated using the data signal D1 with the carrier light $E_C$ as represented by the spectrum 52. The optical multiplexing apparatus 12 multiplexes the subcarrier modulation signal having the subcarrier frequency $\omega_2$ modulated using the data signal D2 with the carrier light $E_C$ as represented by the spectrum 53. The optical multiplexing apparatus 1N multiplexes the subcarrier modulation signal having the subcarrier frequency $\omega_N$ modulated using the data signal DN with the carrier light $E_C$ as represented by the spectrum 54.

The optical reception apparatus 21 receives the carrier light $E_C$ transmitted through the transmission path 31. The optical reception apparatus 21 supplies the received carrier light $E_C$ to the dispersing medium and extracts the data signals D1 to DN from the carrier light $E_C$ which has been supplied through the dispersing medium.

Before description of the optical reception apparatus 21, the optical multiplexing apparatuses 11 to 1N will be described. Then a method for obtaining data signals using optical heterodyne detection, a method for obtaining data signals using an optical filter, and a method for obtaining data signals using a wavelength demultiplexer will be described. Thereafter, the optical reception apparatus 21 will be described.

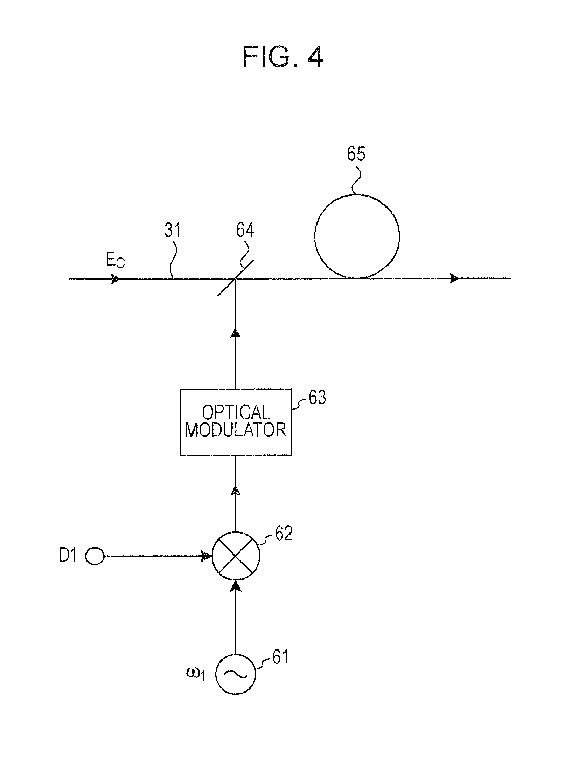

FIG. 4 is a block diagram illustrating an optical multiplexing apparatus. As illustrated in FIG. 4, the optical multiplexing apparatus 11 includes an oscillator 61, a multiplier 62, an optical modulator 63, a multiplexer 64, and a nonlinear optical medium 65.

The oscillator 61 outputs the subcarrier signal having the subcarrier frequency $\omega_1$. The oscillator 61 outputs the subcarrier signal of a sine wave, for example.

The multiplier 62 receives the data signal D1 which is to be transmitted using the carrier light $E_C$ (which is to be multiplexed with the carrier light $E_C$) and the subcarrier signal which is output from the oscillator 61. The multiplier 62 modulates the subcarrier signal using the data signal D1 and outputs a subcarrier modulation signal.

The optical modulator 63 outputs an optical subcarrier modulation signal having a light intensity corresponding to a change of the subcarrier modulation signal output from the multiplier 62. The optical modulator 63 may directly modulate light output from an LD (Laser Diode) or may include an LD and a modulator which modulates light output from the LD.

The multiplexer 64 multiplexes the carrier light $E_C$ which is transmitted from the transmission path 31 with the optical subcarrier modulation signal output from the optical modulator 63. The multiplexer 64 is an optical coupler, for example. The carrier light $E_C$ multiplexed with the optical subcarrier modulation signal is input to the nonlinear optical medium 65.

The carrier light $E_C$ supplied to the nonlinear optical medium 65 is subjected to optical cross-phase modulation performed by the nonlinear optical medium 65 using the optical subcarrier modulation signal so that the carrier light $E_C$ is multiplexed with the optical subcarrier modulation signal. By this, as represented by the spectrum 52 of FIG. 3, for example, the subcarrier modulation signal having the subcarrier frequency $\omega_1$ is multiplexed with the carrier light $E_C$.

Examples of the optical cross-phase modulation performed by the nonlinear optical medium 65 include optical phase modulation in cross-phase modulation, optical intensity modulation utilizing an optical parametric effect, and the like. Furthermore, examples of the nonlinear optical medium 65 include an optical fiber, periodically poled lithium niobate, a semiconductor optical amplifier, and a high index contrast optical waveguide such as a silicon wire waveguide. Note that the optical fiber of the transmission path 31 may be used as the nonlinear optical medium 65 so that the carrier light $E_C$ is subjected to the optical cross-phase modulation using the optical subcarrier modulation signal.

Note that the blocks of the optical multiplexing apparatus 11 illustrated in FIG. 4 are merely examples, and a method for performing phase modulation on the carrier light $E_C$ is not limited to the method using the blocks illustrated in FIG. 4. For example, the multiplexer 11 may perform electrical-optical phase modulation on the carrier light $E_C$ which is transmitted through the transmission path 31 using the subcarrier modulation signal which is an electric signal output from the multiplier 62.

For example, an electrical-optical phase modulator is an external modulator such as a Mach-Zehnder modulator (LN (Lithium Niobate) modulator). The external modulator receives the carrier light $E_C$ which is transmitted from the transmission path 31 and the subcarrier modulation signal output from the multiplier 62. The external modulator performs the phase modulation on the carrier light $E_C$ transmitted through the transmission path 31 using the subcarrier modulation signal which is an electric signal.

Furthermore, although the optical multiplexing apparatus 11 illustrated in FIG. 4 generates one subcarrier modulation signal, the optical multiplexing apparatus 11 may generate subcarrier modulation signals. For example, the optical multiplexing apparatus 11 includes oscillators which output different subcarrier signals having different subcarrier frequencies. In the optical multiplexing apparatus 11, the subcarrier signals output from the oscillators are multiplied by different data signals using multipliers. In the optical multiplexing apparatus 11, subcarrier modulation signals output from the multipliers are added to one another and a resultant signal is modulated by the optical modulator 63.

Furthermore, an optical subcarrier modulation signal may be output from the optical modulator 63 to the multiplexer 64 through a polarization controller so as to have a polarized wave which is the same as that of the carrier light $E_C$.

The optical multiplexing apparatuses 12 to 1N have block configurations the same as that illustrated in FIG. 4, and therefore, descriptions thereof are omitted.

The optical heterodyne detection will now be described. The carrier light $E_C$ which has been subjected to the phase modulation using the optical subcarrier modulation signal is represented by Expression (1) below.

$$E(t) = E_0 \exp\left[ i\omega_0 t + i \sum_{j=1}^{N} m_{aj}(t) \sin\left(\omega_j t + m_{pj}(t) + \phi_{0j}\right) \right] \quad \cdots \quad (1)$$

Here, "$E_0$" represents an electric field amplitude, "$\omega_0$" represents an optical frequency of the carrier light $E_C$, and "$\omega_j$" represents a subcarrier modulation frequency. Furthermore, "$m_{aj}(t)$" and "$m_{pj}(t)$" represent an amplitude modulation component and a phase modulation component (data modulation component), respectively, of a subcarrier signal which has been modulated using a data signal. Moreover, "$\varphi_{0j}$" represents an initial phase.

Note that "j" is a positive integer and corresponds to the optical multiplexing apparatuses 11 to 1N illustrated in FIG. 2. For example, the optical multiplexing apparatuses 11 to 1N illustrated in FIG. 2 correspond to "j=1'" to "j=n", respectively. Hereinafter, the carrier light $E_C$ which has been subjected to the phase modulation using the optical subcarrier modulation signal is referred to as an "optical subcarrier phase modulation signal" where appropriate.

The optical subcarrier phase modulation signal represented by Expression (1) is represented by Expression (2) below as a sum of frequency components $\omega_0$, $\omega_0+\omega_j$, and $\omega_0-\omega_j$ using Bessel function.

$$E(t) = E_0 \left[ \exp(i\omega_0 t) + \sum_{j=1}^{N} J_1\left(m_{aj}\right) \exp\left(i\left[\left(\omega_0 + \omega_j\right)t + m_{pj} + \phi_{0j}\right]\right) \right.$$

$$\left. - \sum_{j=1}^{N} J_1\left(m_{aj}\right) \exp\left(i\left[\left(\omega_0 - \omega_j\right)t - m_{pj} - \phi_{0j}\right]\right) \right] \quad \cdots \quad (2)$$

Here, "$J_1$" represents the Bessel function of the first kind of order 1, and the Bessel function of the first kind of order 2 onwards in the Bessel function of the first kind of order 0 "$J_0=1$" is ignored since it is determined that "$m_{aj}$" is sufficiently small. Optical power of the optical subcarrier phase modulation signal represented by Expression (2) is obtained by "$P(t) = |E(t)|^2$" and represented by Expression (3) below.

$$P(t) = E_0^2 \quad (3)$$

When the optical subcarrier phase modulation signal is subjected to intensity detection using a PD (Photo Detector), the items of the data modulation components "$m_{aj}$" and "$m_{pj}$" are removed as represented by Expression (3). Therefore, when all frequency components of the optical subcarrier phase modulation signal are converted into electric signals using the PD, a subcarrier modulation signal is not received.

Accordingly, it is considered that the optical subcarrier phase modulation signal and a local light source $E_L$ are multiplexed with each other so that the heterodyne detection is performed. The optical subcarrier phase modulation signal multiplexed with the local light source $E_L$ is represented by Expression (4) below.

$$E_{hd}(t) = E_L \exp(i\omega_L t) + E(t) \quad (4)$$

Here, "$E_L$" represents an electric field amplitude of the local light source and "$\omega_L$" represents an optical frequency of the local light source.

Optical power of the optical subcarrier phase modulation signal multiplexed with the local light source $E_L$ is obtained by "$P(t) = |E_{hd}(t)|^2$ and represented by Expression (5) below.

$$P_{hd}(t) = E_L^2 + E_0^2 + 2E_L E_0 \left[ \cos(\omega_L t - \omega_0 t) + 2\sin(\omega_L t - \omega_0 t)\sum_{j=1}^{N} J_1(m_{aj})\sin(\omega_j t + m_{pj} + \phi_{0j}) \right] \cdots (5)$$

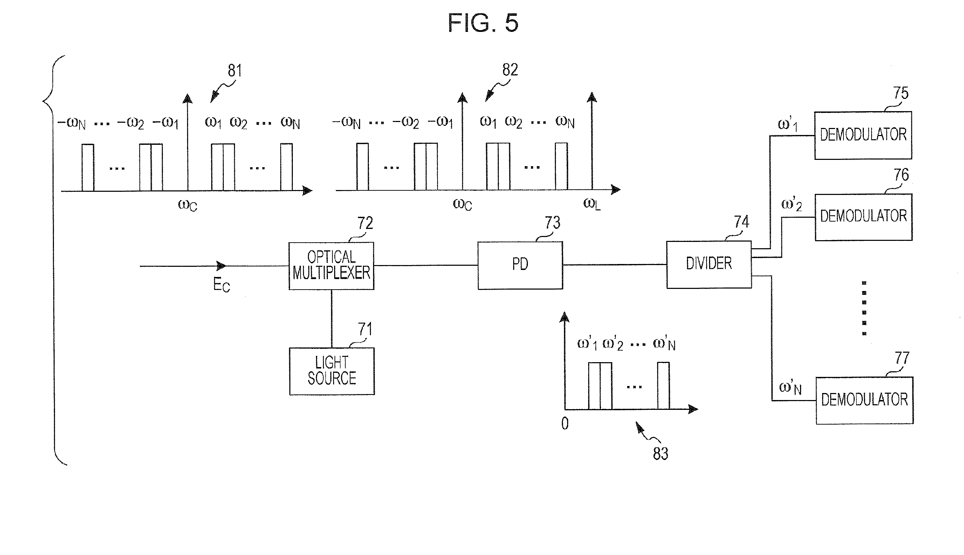

In Expression (5), the items of the data modulation components "$m_{aj}$" and "$m_{pj}$" remain. Specifically, in the optical heterodyne detection, a data signal may be received by the PD. FIG. 5 is a diagram illustrating data demodulation utilizing the optical heterodyne detection. As illustrated in FIG. 5, an optical reception apparatus includes a light source 71, an optical multiplexer 72, a PD 73, a divider 74, and demodulators 75 to 77. Although the three demodulators 75 to 77 are illustrated in FIG. 5, N demodulators are employed.

In FIG. 5, a spectrum 81 of the carrier light $E_C$ which is to be input to the optical multiplexer 72 is illustrated. Furthermore, in FIG. 5, a spectrum 82 of light output from the optical multiplexer 72 is also illustrated. Moreover, in FIG. 5, a spectrum 83 of an electric signal output from the PD 73 is also illustrated. An axis of abscissa represents a frequency and an axis of ordinate represents power.

The light source 71 outputs local light of an optical frequency $\omega_L$. The local light is CW light. To the optical multiplexer 72, the carrier light $E_C$ (optical subcarrier phase modulation signal) and the local light output from the light source 71 are input. The optical multiplexer 72 multiplexes the carrier light $E_C$ with the local light. By this, in light output from the optical multiplexer 72, a spectrum of the local light appears in the optical frequency $\omega_L$ as represented by the spectrum 82.

The PD 73 converts the light output from the optical multiplexer 72 into an electric signal. A spectrum of the electric signal output from the PD 73 is represented as the spectrum 83. Note that the relationship between "$\omega_j$" and "$\omega'_j$" is represented by Expression (6) below.

$$\omega'_j = |\omega_L - (\omega_C + \omega_j)| \cdots \quad (6)$$

The divider 74 divides the electric signal output from the PD 73 according to frequencies so as to output the electric signal to the demodulators 75 to 77. For example, the divider 74 outputs an electric signal of a frequency $\omega'_1$ to the demodulator 75. Furthermore, the divider 74 outputs an electric signal of a frequency $\omega'_2$ to the demodulator 76. Similarly, the divider 74 outputs an electric signal of a frequency $\omega'_N$ to the demodulator 77.

The demodulators 75 to 77 demodulate the electric signals divided by the divider 74 so as to obtain data signals.

A method for obtaining data signals using an optical filter will be described. A case where an optical filter which allows light having a frequency component $\omega_0 + \omega_j$ to pass and which blocks light having a frequency component $\omega_0 - \omega_j$ allows the optical subcarrier phase modulation signal to pass is taken as an example. In this case, the optical subcarrier phase modulation signal output from the optical filter is represented by an equation obtained by removing the third item of Expression (2). Optical power of the optical subcarrier phase modulation signal which passes the optical filter is represented by Expression (7) below.

$$P(t) = E_0^2 \left[ 1 + 2 \sum_{j=1}^{N} J_1 (m_{aj}) \cos(\omega_j t + m_{pj} + \phi_{0j}) \right] \quad \cdots \quad (7)$$

In Expression (7), items of the data modulation components "$m_{aj}$" and "$m_{pj}$" remain. Specifically, the optical reception apparatus obtains data signals by causing the optical filter which allows the light having the frequency component $\omega_0 + \omega_j$ to pass and which blocks the light having the frequency component $\omega_0 - \omega_j$ to allow the optical subcarrier phase modulation signal to pass and converting the optical subcarrier phase modulation signal into an electric signal using the PD.

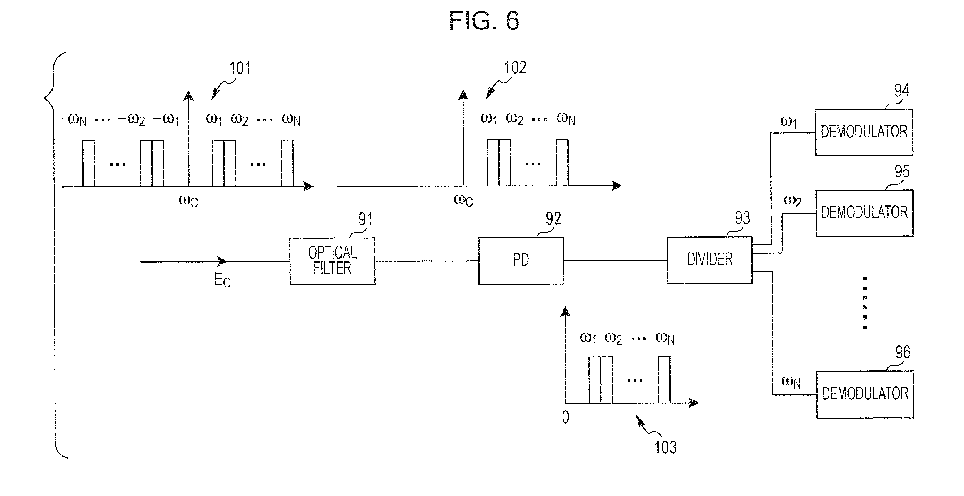

FIG. 6 is a diagram illustrating an optical reception apparatus including an optical filter. As illustrated in FIG. 6, the optical reception apparatus includes an optical filter 91, a PD 92, a divider 93, and demodulators 94 to 96. Although the three demodulators 94 to 96 are illustrated in FIG. 6, N demodulators are employed.

In FIG. 6, a spectrum 101 of the carrier light $E_C$ which is to be input to the optical filter 91 is illustrated. Furthermore, a spectrum 102 of light output from the optical filter 91 is also illustrated. Moreover, a spectrum 103 of an electric signal output from the PD 92 is also illustrated. An axis of abscissa represents a frequency and an axis of ordinate represents power.

The optical filter 91 has a box-shaped wavelength transmission characteristic and allows the light of the frequency component $\omega_0 + \omega_j$ to pass and blocks the light of the frequency component $\omega_0 - \omega_j$. Therefore, a spectrum of the optical subcarrier phase modulation signal which passes through the optical filter 91 is represented as the spectrum 102.

The PD 92 converts the optical subcarrier phase modulation signal which passes through the optical filter 91 into an electric signal. A spectrum of the electric signal output from the PD 92 is represented as the spectrum 103.

The divider 93 divides the electric signal output from the PD 92 according to frequencies so as to output an electric signal to the demodulators 94 to 96. For example, the divider 93 outputs an electric signal of a subcarrier frequency $\omega_1$ to the demodulator 94. Moreover, the divider 93 outputs an electric signal of a subcarrier frequency $\omega_2$ to the demodulator 95. Similarly, the divider 93 outputs an electric signal of a subcarrier frequency $\omega_N$ to the demodulator 96.

The demodulators 94 to 96 demodulate the electric signals divided by the divider 93 so as to obtain data signals.

A method for obtaining data signals using an optical wavelength demultiplexer will be described. The optical reception apparatus obtains data signals, according to Expression (2), if optical subcarrier phase modulation signals obtained by assigning various values "j" to the frequency component $\omega_0 + \omega_j$ are extracted and are converted into electric signals. Alternatively, the optical reception apparatus obtains data signals if optical subcarrier phase modulation signals obtained by assigning various values "j" to the frequency component $\omega_0 - \omega_j$ are extracted and are converted into electric signals.

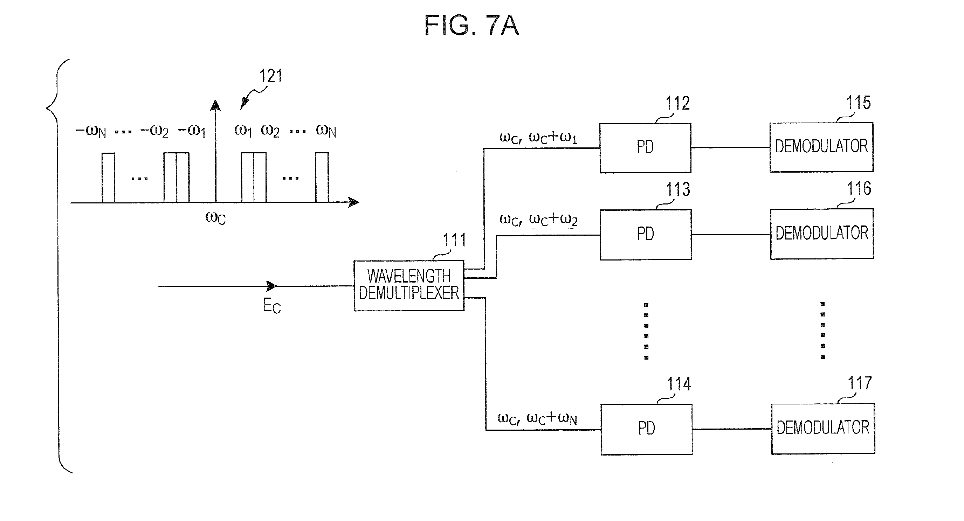

FIG. 7A is a diagram illustrating an optical reception apparatus including an optical wavelength demultiplexer. As illustrated in FIG. 7A, the optical reception apparatus includes a wavelength demultiplexer 111, PDs 112 to 114, and demodulators 115 to 117. Although the three PDs 112 to 114 and the three demodulators 115 to 117 are illustrated in FIG. 7A, N PDs and N demodulators are employed.

In FIG. 7A, a spectrum 121 of the carrier light $E_C$ which is to be input to the optical multiplexer 111 is illustrated. An axis of abscissa represents a frequency and an axis of ordinate represents power. The wavelength demultiplexer 111 demultiplexes received optical subcarrier phase modulation signals according to frequencies and outputs the demultiplexed optical subcarrier phase modulation signals to the PDs 112 to 114. For example, the wavelength demultiplexer 111 outputs light which is obtained through the demultiplexing and which has optical frequencies $\omega_C$ and $\omega_C + \omega_1$, to the PD 112. Furthermore, the wavelength demultiplexer 111 outputs light which is obtained through the demultiplexing and which has an optical frequencies $\omega_C$ and $\omega_C + m_2$ to the PD 113.

Similarly, the wavelength demultiplexer 111 outputs light which is obtained through the demultiplexing and which has optical frequencies $\omega_C$ and $\omega_C + \omega_N$ to the PD 114. Specifically, the wavelength demultiplexer 111 demultiplexes the optical subcarrier phase modulation signals in accordance with the spectrum 121 and outputs the demultiplexed optical subcarrier phase modulation signals to the PDs 112 to 114.

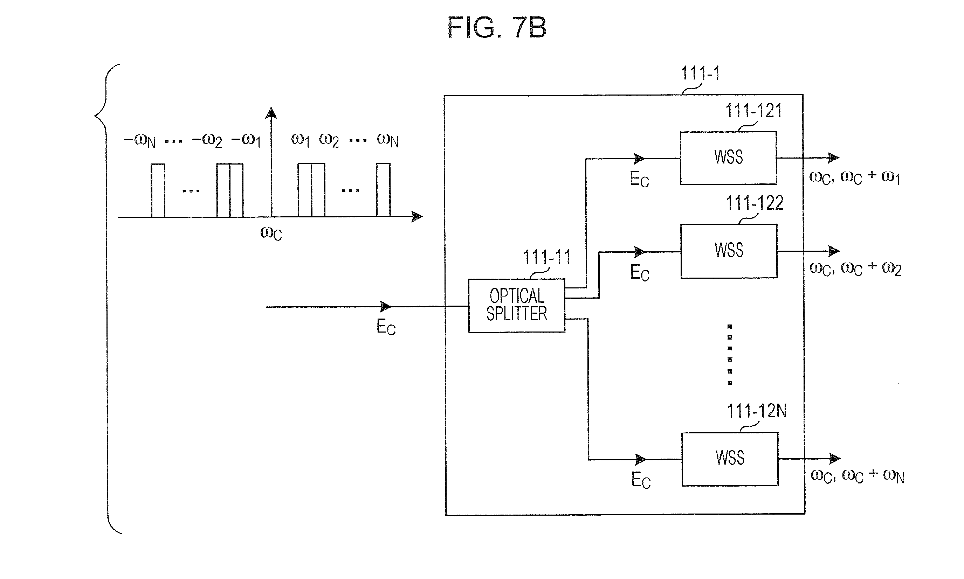

FIG. 7B is a diagram illustrating a configuration of the wavelength demultiplexer 111 of FIG. 7A. A wavelength demultiplexer 111-1 includes an optical splitter 111-11 which splits the input carrier light $E_C$ into two or more light beams. The carrier light $E_C$ split by the optical splitter 111-11 is supplied to WSSs (Wavelength Selective Switches). For example, a WSS 111-121 selects optical frequencies $\omega_c$ and $\omega_c + \omega_1$ from the split carrier light $E_C$ and outputs the optical frequencies $\omega_c$ and $\omega_c + \omega_1$. A WSS 111-122 selects optical frequencies $\omega_c$ and $\omega_c + \omega_2$ from the split carrier light $E_C$ and outputs the optical frequencies $\omega_c$ and $\omega_c + \omega_2$. A WSS 111-12N selects optical frequencies $\omega_c$ and $\omega_c + \omega_N$ from the split carrier light $E_C$ and outputs the optical frequencies $\omega_c$ and $\omega_c + \omega_N$.

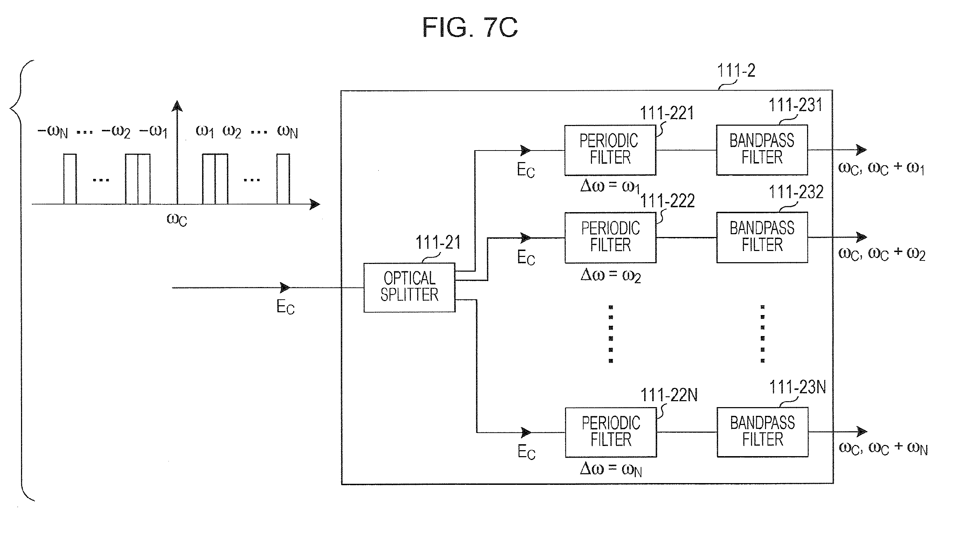

FIG. 7C is a diagram illustrating another configuration of the wavelength demultiplexer 111 of FIG. 7A. A wavelength demultiplexer 111-2 includes an optical splitter 111-21 which splits the input carrier light $E_C$ into two or more light beams. The carrier light $E_C$ split by the optical splitter 111-21 is supplied to periodic filters (such as etalons, Mach-Zehnder interferometers, Michelson interferometers, Bragg grating filters, ring resonators, or acousto-optic filters) 111-221 to 111-22N and further supplied to bandpass filters 111-231 to 111-23N in the next stage. Arrangement positions of the periodic filters 111-221 to 111-22N and arrangement positions of the bandpass filters 111-231 to 111-23N may be reversed.

A combination of one of the wavelength demultiplexers 111-221 to 111-22N and a corresponding one of the bandpass filters 111-231 to 111-23N selects optical frequencies $\omega_c$ and $\omega_c + \omega_m$ (where m is an integer selected from 1 to N) from the split carrier light $E_C$ and outputs s the optical frequencies $\omega_c$ and $\omega_c + \omega_m$.

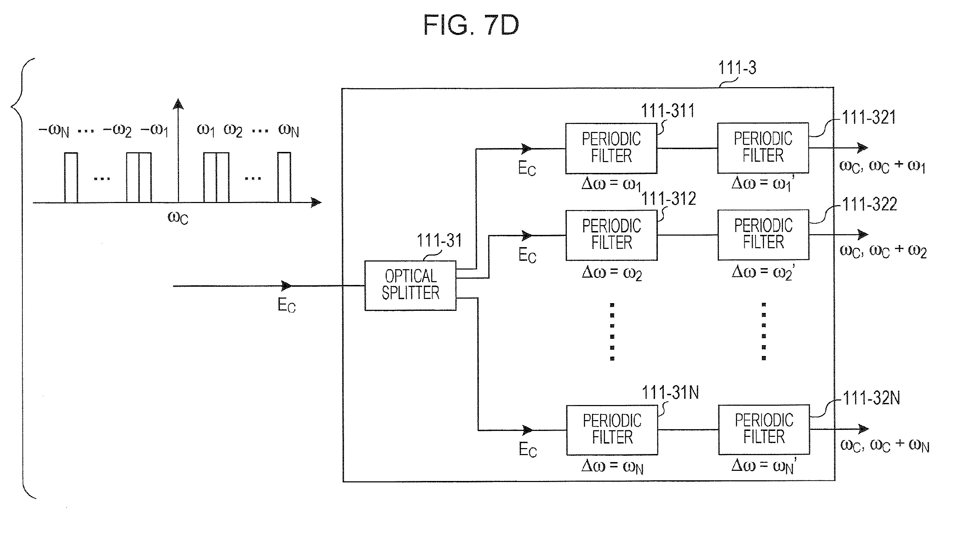

FIG. 7D is a diagram illustrating a further configuration of the wavelength demultiplexer 111 of FIG. 7A. A wavelength demultiplexer 111-3 includes an optical splitter 111-31 which splits the input carrier light $E_C$ into two or more light beams. The carrier light $E_C$ split by the optical splitter 111-31 is supplied to periodic filters (such as etalons, Mach-Zehnder interferometers, Michelson interferometers, Bragg grating filters, ring resonators, or acousto-optic filters) 111-311 to 111-31N and further supplied to periodic filters 111-321 to 111-32N in the next stage. Arrangement positions of the periodic filters 111-311 to 111-31N and arrangement positions of the periodic filters 111-321 to 111-32N may be reversed.

For example, a combination of one of the periodic filters 111-311 to 111-31N and a corresponding one of the periodic filters 111-321 to 111-32N selects optical frequencies $\omega_c$ and $\omega_c + \omega_N$ from the split carrier light $E_C$ and outputs the optical frequencies $\omega_c$ and $\omega_c + \omega_N$.

Note that "$\Delta\omega = \omega_m$" and "$\Delta\omega_m$'" are determined so that transparent wavelengths of the periodic filters 111-31m and 111-32m (m is an integer selected from 1 to N) have optical frequencies $\omega_c$ and $\omega_c + \omega_m$.

++In FIG. 7D, the carrier light $E_C$ split by the optical splitter 111-31 is supplied to periodic filters (such as etalons, Mach-Zehnder interferometers, Michelson interferometers, Bragg grating filters, ring resonators, or acousto-optic filters) 111-311 to 111-31N and further supplied to periodic filters 111-321 to 111-32N in the next stage. Arrangement positions of the periodic filters 111-311 to 111-31N and arrangement positions of the periodic filters 111-321 to 111-32N may be reversed.

For example, a combination of one of the periodic filters 111-311 to 111-31N and a corresponding one of the periodic filters 111-321 to 111-32N selects optical frequencies $\omega_c$ and $\omega_c + \omega_N$ from the split carrier light $E_C$ and outputs the optical frequencies $\omega_c$ and $\omega_c + \omega_N$.

Note that "$\Delta\omega = \omega_m$" and "$\Delta\omega_m$'" are determined so that transparent wavelengths of the periodic filters 111-31m and 111-32m (m is an integer selected from 1 to N) have optical frequencies $\omega_c$ and $\omega_c + \omega_m$.

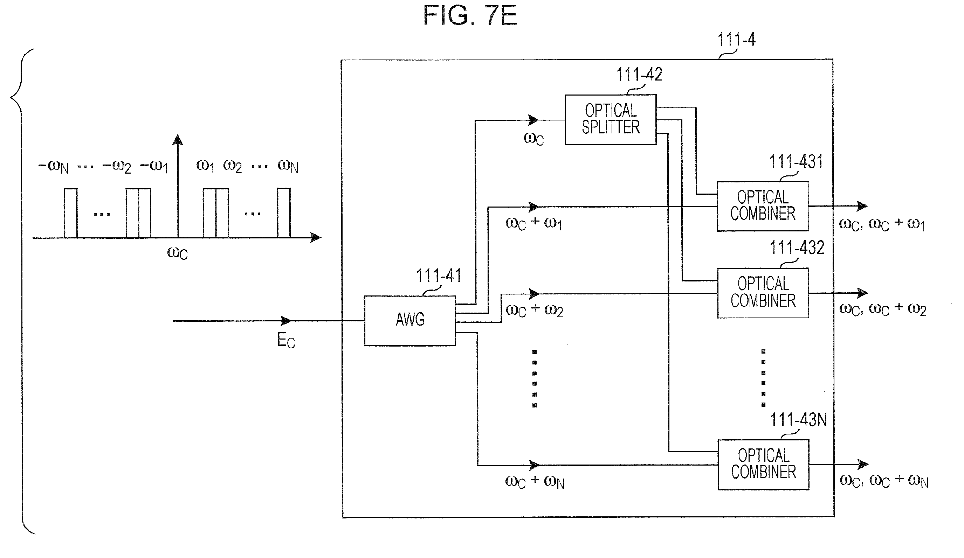

FIG. 7E is a diagram illustrating a still further configuration of the wavelength demultiplexer 111 of FIG. 7A. A wavelength demultiplexer 111-4 includes an AWG (Arrayed Waveguide Grating) 111-41 which demultiplexes the input carrier light $E_C$. An optical frequency $\omega_c$ demultiplexed by the AWG 111-41 is supplied to an optical splitter 111-42, and other optical frequencies $\omega_c + \omega_m$ (m is in an integer selected from 1 to N) are supplied to optical combiners 111-431 to 111-43N. Each of the optical combiners 111-431 to 111-43N receives the optical frequency $\omega_c + \omega_m$ (m is an integer selected from 1 to N) split by the AWG 111-41 and the optical frequency $\omega_c$ split by the optical splitter 111-42 and outputs light obtained by combining the optical frequency $\omega_c + \omega_m$ and the optical frequency $\omega_c$ with each other.

The PDs 112 to 114 convert light output from the optical multiplexer 111 into electric signals. The PDs 112 to 114 output respective subcarrier modulation signals having the corresponding subcarrier frequencies $\omega_1$ to $\omega_N$.

The demodulators 115 to 117 demodulate the subcarrier modulation signals output from the PDs 112 to 114 so as to obtain data signals.

The optical reception apparatus 21 illustrated in FIG. 2 will be described. The optical reception apparatus 21 obtains the data signals D1 to DN by supplying received optical subcarrier phase modulation signals to the dispersing medium and performing optical-electrical conversion on the optical subcarrier phase modulation signals. Hereinafter, (1) a case where the dispersing medium is a chromatic dispersing medium, (2) a case where the dispersing medium is a birefringent medium, and (3) a case where the dispersing medium is a delay interferometer or a multi-mode waveguide will be described.

1. Chromatic Dispersing Medium

The optical reception apparatus 21 extracts data modulation components of the optical subcarrier phase modulation signals as optical power components using a chromatic dispersing medium. An electric field of the optical subcarrier phase modulation signals which have been transmitted through the chromatic dispersing medium having a propagation coefficient $\beta$ and a length L is represented by Expression (8) below.

$$E'(t) = E(t)\exp(i\beta(\omega)L) \cdots (8)$$

Here, "β" represents a propagation coefficient of the chromatic dispersing medium as described above, and the Taylor series expansion in the vicinity of the optical frequency $\omega_0$ is represented by Expression (9) below.

$$\beta(\omega) = \beta_0 + \beta_1(\omega - \omega_0) + \frac{1}{2}\beta_2(\omega - \omega_0)^2 + \cdots \qquad \cdots \ (9)$$

Here, "$\beta_m$" (m is a positive integer) in Expression (9) is represented by Expression (10) below.

$$\beta_m = \left(\frac{d^m\beta}{d\omega^m}\right)_{\omega=\omega_0} \qquad \cdots \ (10)$$

Accordingly, different group delays are assigned to the items of Expression (2) and Expression (11) is obtained.

$$E(t) = E_0 \left[ \exp(i\omega_0 t + i\beta(\omega_0)L) + \sum_{j=1}^{N} J_1(m_{aj}) \exp(i[(\omega_0 + \omega_j)t + m_{pj} + \phi_{0j} + \beta(\omega_0 + \omega_j)L]) \right.$$

$$\left. - \sum_{j=1}^{N} J_1(m_{aj}) \exp(i[(\omega_0 - \omega_j)t - m_{pj} - \phi_{0j} + \beta(\omega_0 - \omega_j)L]) \right] \cdots(11)$$

Taking part of Expression (11) until second-order dispersion (until the third item of Expression (9)) into consideration, optical power obtained after transmission through the chromatic dispersing medium is represented by Expression (12) below.

$$P(t) = E_0^2 \left[ 1 - 4\sum_{j=1}^{N} J_1(m_{aj})\sin(\omega_j t + m_{pj} + \phi_{0j} + \beta_1\omega_j L)\sin\left(\frac{1}{2}\beta_2\omega_j^2 L\right) \right] \qquad \cdots \ (12)$$

According to Expression (12), it is apparent that the data modulation components "$m_{aj}$" and "$m_{pj}$" remain in the optical power of the optical subcarrier phase modulation signals transmitted through the chromatic dispersing medium. Specifically, the data signals D1 to DN are obtained from the optical power of the optical subcarrier phase modulation signals which are transmitted through the chromatic dispersing medium.

According to Expression (12), the data modulation components "$m_{aj}$" and "$m_{pj}$" become maximum when a condition represented by Expression (13) below is satisfied.

$$\sin\left(\frac{1}{2}\beta_2\omega_j^2 L\right) = \pm 1 \qquad \cdots \ (13)$$

Accordingly, an optimum length of the chromatic dispersing medium is represented by Expression (14) below.

$$L_{opt} = \frac{(2n-1)\pi}{\beta_2 \omega_j^2} = \frac{c}{2\lambda_0^2 f_j^2 D} \quad \cdots \quad (14)$$

Note that "$\lambda_0$" represents a center wavelength ($\lambda_0 = 2\pi c/\omega_0$), "D" represents chromatic dispersion ($D = 2\pi c \beta_2 / \lambda_0^2$), "c" represents light speed, and "n" represents a positive integer.

2. Birefringent Medium

The optical reception apparatus 21 extracts the data modulation components of the optical subcarrier phase modulation signals as optical power components using a birefringent medium. Electric fields of the optical subcarrier phase modulation signals which have passed the birefringent medium are represented by Expression (15) below.

$$E'(t) = E(t) \exp\left(iD_p(\omega)\sqrt{L}\right) \quad \cdots \quad (15)$$

Here, "$D_p$" is a polarization mode dispersion parameter, and the Taylor series expansion in the vicinity of the optical frequency $\omega_0$ is represented by Expression (16) below.

$$D_p(\omega) = D_{p0} + D_{p1}(\omega - \omega_0) + \frac{1}{2}D_{p2}(\omega - \omega_0)^2 + \cdots \quad \cdots \quad (16)$$

Here, "$D_{Pm}$" (m is a positive integer) in Expression (16) is represented by Expression (17) below.

$$D_{pm} = \left(\frac{d^m D_p}{d\omega^m}\right)_{\omega = \omega_0} \quad \cdots \quad (17)$$

Accordingly, different polarization mode dispersions are given to the items in Expression (2) and Expression (18) is obtained.

$$E(t) = E_0 \left[ \exp\left(i\omega_0 t + iD_p(\omega_0)\sqrt{L}\right) + \sum_{j=1}^{N} J_1(m_{aj}) \exp\left(i\left[(\omega_0 + \omega_j)t + m_{pj} + \phi_{0j} + D_p(\omega_0 + \omega_j)\sqrt{L}\right]\right) \right.$$
$$\left. - \sum_{j=1}^{N} J_1(m_{aj}) \exp\left(i\left[(\omega_0 - \omega_j)t - m_{pj} - \phi_{0j} + D_p(\omega_0 - \omega_j)\sqrt{L}\right]\right) \right] \cdots (18)$$

Taking part of Expression (18) until second-order polarization mode dispersion (until the third item of Expression (16)) into consideration, the optical power of the optical subcarrier phase modulation signals which have been transmitted through the birefringence dispersing medium is represented by Expression (19) below.

$$P(t) = E_0^2 \left[ 1 - 4\sum_{j=1}^{N} J_1(m_{aj}) \sin\left(\omega_j t + m_{pj} + \phi_{0j} + D_{p1}\omega_j\sqrt{L}\right) \sin\left(\frac{1}{2}D_{p2}\omega_j^2\sqrt{L}\right) \right] \quad \cdots \quad (19)$$

According to Expression (19), it is apparent that the data modulation components "$m_{aj}$" and "$m_{pj}$" remain in the optical power of the optical subcarrier phase modulation signals transmitted through the birefringence dispersing medium.

Specifically, the data signals D1 to DN are obtained from the optical power of the optical subcarrier phase modulation signals which have been transmitted through the birefringence dispersing medium.

According to Expression (19), the data modulation components "$m_{aj}$" and "$m_{pj}$" become maximum when a condition represented by Expression (20) below is satisfied.

$$\sin\left(\frac{1}{2}D_{p2}\omega_j^2\sqrt{L}\right) = \pm 1 \quad \cdots (20)$$

Accordingly, an optimum length of the birefringence dispersing medium is represented by Expression (21) below.

$$L_{opt} = \left(\frac{(2n-1)\pi}{D_{p2}\omega_j^2}\right)^2 \quad \cdots (21)$$

Note that "n" is a positive integer.

3. Delay interferometer or Multi-mode waveguide

The optical reception apparatus 21 extracts the data modulation components of the optical subcarrier phase modulation signals as optical power components using a difference among delay times of branching paths of a delay interferometer or mode dispersion of a multi-mode waveguide. Electric fields of the optical subcarrier phase modulation signals which have passed the delay interferometer or the multi-mode waveguide is represented by Expression (22) below.

$$E(t) = C_a^2 E(t)\exp(i\beta_a(\omega)L_a) - C_b^2 E(t)\exp(i\beta_b(\omega)L_b) \quad (22)$$

Here, "$C_a$" and "$C_b$" represent branching coefficients or mode coupling coefficients for the paths, "$L_a$" and "$L_b$" represent lengths of the paths used when the delay interferometer is employed, and "$\beta_a$'" and "$\beta_b$" are propagation coefficients of various modes used when the multi-mode waveguide is employed. Optical power of the optical subcarrier phase modulation signals which have passed the delay interferometer or the multi-mode waveguide is represented by Expression (23) below.

$$P(t) = E_0^2\left[C_a^4 + C_b^4 - 2C_a^2C_b^2\cos(\beta_0(L_a - L_b))\right.$$

$$\left. + 8C_a^2C_b^2\sin(\beta_0(L_a - L_b))\sum_{j=1}^{N}J_1(m_{aj})\cos\left(\omega_j t + m_{pj} + \phi_{0j} + \frac{1}{2}\beta_1\omega_j(L_a + L_b)\right)\sin\left(\frac{1}{2}\beta_1\omega_j(L_a - L_b)\right)\right]$$

$$\cdots (23)$$

According to Expression (23), it is apparent that the data modulation components "$m_{aj}$" and "$m_{pj}$" remain in the optical power of the optical subcarrier phase modulation signals transmitted through the delay interferometer or the multi-mode waveguide. Specifically, the data signals D1 to DN are obtained from the optical power of the optical subcarrier phase modulation signals which have been transmitted through the delay interferometer or the multi-mode waveguide.

According to Expression (23), the data modulation components "$m_{aj}$" and "$m_{pj}$" become maximum when conditions represented by Expressions (24a) and (24b) below are satisfied.

$$\beta_0\left(L_1 - L_2\right) = \left(2m - 1\right)\frac{\pi}{2} \quad \cdots (24a)$$

$$\frac{1}{2}\beta_1\omega_j\left(L_1 - L_2\right) = \left(2n - 1\right)\frac{\pi}{2} \quad \cdots (24b)$$

Note that "m" and "n" denote positive integers.

In the optical heterodyne detection illustrated in FIG. 5, a wavelength (optical frequency) of the light source 71 is preferably controlled with high accuracy. Furthermore, the optical filter 91 illustrated in FIG. 6 allows the frequency component $\omega_0 + \omega_j$ to pass without attenuation and has a high-performance box-shaped wavelength transmission characteristic for sufficiently blocking the frequency component $\omega_0 - \omega_j$. Specifically, when a subcarrier frequency of a subcarrier modulation signal is low, the optical filter 91 preferably has a steep box-shaped wavelength transmission characteristic. Furthermore, the wavelength demultiplexer 111 illustrated in FIG. 7A is preferably a high performance wavelength demultiplexer which performs demultiplexing to obtain desired wavelengths so that other wavelength components are not included.

On the other hand, the optical reception apparatus 21 illustrated in FIG. 2 includes the dispersing medium which allows the optical subcarrier phase modulation signals to be transmitted. By this, the optical reception apparatus 21 obtains the data modulation components "$m_{aj}$" and "$m_{pj}$" from the optical power of the optical subcarrier phase modulation signals. Specifically, the optical reception apparatus 21 obtains the data signals D1 to DN without using a light source, an optical filter, and a wavelength demultiplexer. Specifically, the optical reception apparatus 21 obtain the data signals D1 to DN by allowing the optical subcarrier phase modulation signals to be supplied to the dispersing medium without performing high-accuracy wavelength control.

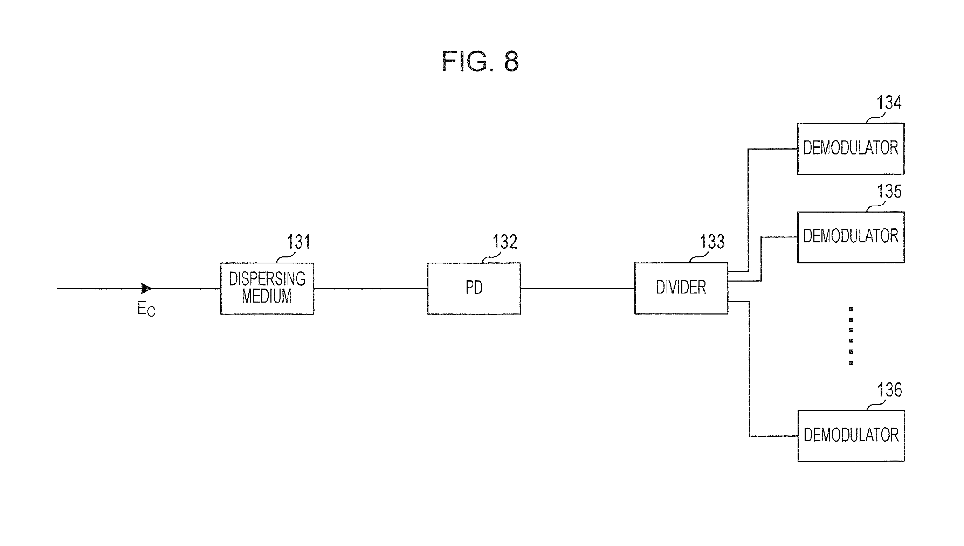

FIG. 8 is a diagram illustrating the optical reception apparatus illustrated in FIGs. 1 and 2. As illustrated in FIG. 8, the optical reception apparatus 21 includes a dispersing medium 131, a PD 132, a divider 133, and demodulators 134 to 136. Although the three demodulators 134 to 136 are illustrated in FIG. 8, N demodulators are employed.

The carrier light $E_C$ is supplied through the transmission path 31 to the dispersing medium 131. The carrier light $E_C$ is subjected to phase modulation using optical subcarrier modulation signals output from the optical multiplexing apparatuses 11 to 1N, for example, and includes the data D1 to DN which are multiplexed.

The dispersing medium 131 is a chromatic dispersing medium which gives a group delay (phase difference) to a double-sideband component of the optical subcarrier phase modulation signal, for example. Examples of the chromatic dispersing medium include an optical fiber, fiber Bragg grating and the VIPA (Virtually Imaged Phased Array).

Alternatively, the dispersing medium 131 is a birefringent medium which gives different group delays to two different polarization components of input light, for example. Examples of the birefringent medium include a polarization maintaining fiber, an optical waveguide having a non-uniform configuration relative to a circumferential direction of optical electric field distribution, and a birefringent optical crystal.

Alternatively, the dispersing medium 131 is a delay interferometer which assigns input signal light to two paths and gives different optical delay times to the different paths, for example. Examples of the delay interferometer include and a Mach-Zehnder interferometer including an optical splitter, two optical delay lines having different path lengths, and an optical combiner. The examples of the delay interferometer further include a nonlinear loop mirror which includes an optical splitter, a nonlinear optical medium, and a control light source. The examples of the delay interferometer further include a delay interferometer which causes a difference between delay times of two polarization modes by inputting light into the birefringent medium in a polarization plane which is shifted by 45 degrees relative to a polarization main axis of the birefringent medium.

Alternatively, the dispersing medium 131 is a multi-mode waveguide which converts input light into different propagation modes and gives different group delays to the different propagation modes. Examples of the multi-mode waveguide include a multimode fiber and a multimode optical waveguide (PLC (Planar Lightwave Circuit) and a high-refractive index difference waveguide).

The PD 132 converts light output from the dispersing medium 131 into an electric signal. Note that when the multi-mode waveguide is employed as the dispersing medium 131, a mode converter is provided in a stage before the PD 132. Specifically, the optical reception apparatus 21 causes the mode converter to convert light output from the multi-mode waveguide into light of a certain waveguide mode so that the PD 132 may receive the light. Note that the mode converter is not used when a diameter of the PD 132 is sufficiently large.

The divider 133 divides the electric signal output from the PD 132 according to subcarrier frequencies so as to output electric signals to the demodulators 134 to 136.

The demodulators 134 to 136 demodulates the electric signals (subcarrier modulation signals) divided by the divider 133 so as to obtain the data signals D1 to DN.

Examples of the demodulators 134 to 136 include envelope detectors, phase detectors, and frequency detectors, for example. For example, when subcarrier modulation signals are subjected to amplitude modulation using the data signals D1 to DN, the demodulators 134 to 136 are envelope detectors. On the other hand, when the subcarrier modulation signals are subjected to phase modulation using the data signals D1 to DN, the demodulators 134 to 136 are phase detectors. Furthermore, when subcarrier modulation signals are subjected to frequency modulation using the data signals D1 to DN, the demodulators 134 to 136 are frequency detectors. Note that, in the case of the example illustrated in FIG. 4, the subcarrier modulation signals are subjected to amplitude modulation. Accordingly, in this case, the demodulators 134 to 136 are envelope detectors.

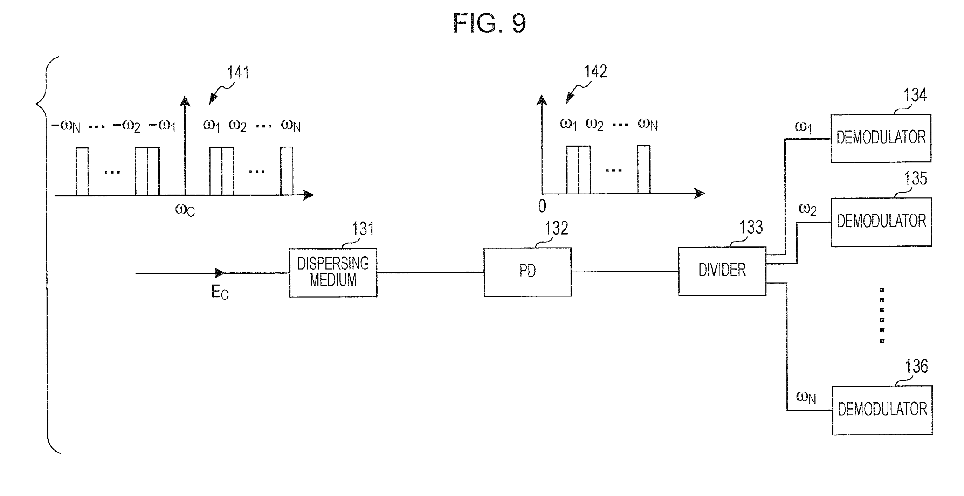

FIG. 9 is a diagram illustrating operation of the optical reception apparatus illustrated in FIG. 8. In FIG. 9, components the same as those illustrated in FIG. 8 are denoted by reference numerals the same as those illustrated in FIG. 8, and descriptions thereof are omitted.

In FIG. 9, a spectrum 141 of the carrier light $E_C$ which is input to the dispersing medium 131 is illustrated.

Furthermore, a spectrum 142 of an electric signal output from the PD 132 is also illustrated.

In the carrier light $E_C$, subcarrier modulation signals having subcarrier frequencies $\omega_1$ to $\omega_N$ are multiplexed as represented by the spectrum 141. The carrier light $E_C$ represented by the spectrum 141 is transmitted through the dispersing medium 131 and converted into an electric signal by the PD 132.

The electric signal output from the PD 132 is a subcarrier modulation signal having the subcarrier frequencies $\omega_1$ to $\omega_N$ as represented by the spectrum 142. The divider 133 divides the subcarrier modulation signals having the subcarrier frequencies $\omega_1$ to $\omega_N$ according to components of the subcarrier frequencies $\omega_1$ to $\omega_N$ and outputs the signals to the demodulators 134 to 136.

For example, the divider 133 outputs the subcarrier modulation signal having the subcarrier frequency $\omega_1$ to the demodulator 134. Furthermore, the divider 133 outputs the subcarrier modulation signal having the subcarrier frequency $\omega_2$ to the demodulator 135. Similarly, the divider 133 outputs the subcarrier modulation signal having the subcarrier frequency $\omega_N$ to the demodulator 136.

The demodulators 134 to 136 demodulate the subcarrier modulation signals obtained through the division performed by the divider 133. For example, the demodulator 134 modulates the subcarrier modulation signal having the sub-carrier frequency $\omega_1$ which is obtained through the division performed by the divider 133 so as to obtain the data signal D1.

For example, the demodulator 135 modulates the subcarrier modulation signal having the sub-carrier frequency $\omega_2$ which is obtained through the division performed by the divider 133 so as to obtain the data signal D2. Similarly, the demodulator 136 modulates the subcarrier modulation signal having the sub-carrier frequency $\omega_N$ which is obtained through the division performed by the divider 133 so as to obtain the data signal DN.

As described above, in the optical reception apparatus 21, the carrier light $E_C$ which has been subjected to the phase modulation in accordance with the subcarrier modulation signals modulated using the data signals D1 to DN is input to the dispersing medium 131. Then the optical reception apparatus 21 extracts data which has been multiplexed with the carrier light $E_C$ from the light output from the dispersing medium 131. Accordingly, the optical reception apparatus 21 may obtain the data signals without performing high-accuracy wavelength control.

Note that, although the optical reception apparatus 21 includes the dispersing medium 131 in the foregoing description, the dispersing medium 131 may be disposed in the transmission path 31. The optical reception apparatus 21 extracts the data signals D1 to DN when the carrier light $E_C$ which is appropriately distributed by the dispersing medium 131 is received. Specifically, the dispersing medium 131 may be disposed in one of the transmission path 31 and the optical reception apparatus 21 or both of the transmission path 31 and the optical reception apparatus 21.

Furthermore, when the carrier light $E_C$ has been subjected to baseband modulation, frequencies of the optical subcarrier modulation signals are set so as to be sufficiently larger than a bit rate of the carrier light $E_C$ which has been subjected to the baseband modulation. By this, influence of dispersion, which is performed by the dispersing medium 131, of the carrier light $E_C$ which has been subjected to the baseband modulation becomes small.

Third Embodiment

A third embodiment will now be described with reference to the accompanying drawings. In the third embodiment, power (electric power) of an electric signal which has been subjected to optical-electrical conversion performed by a PD is monitored, and a dispersing medium is controlled in accordance with the monitored power.

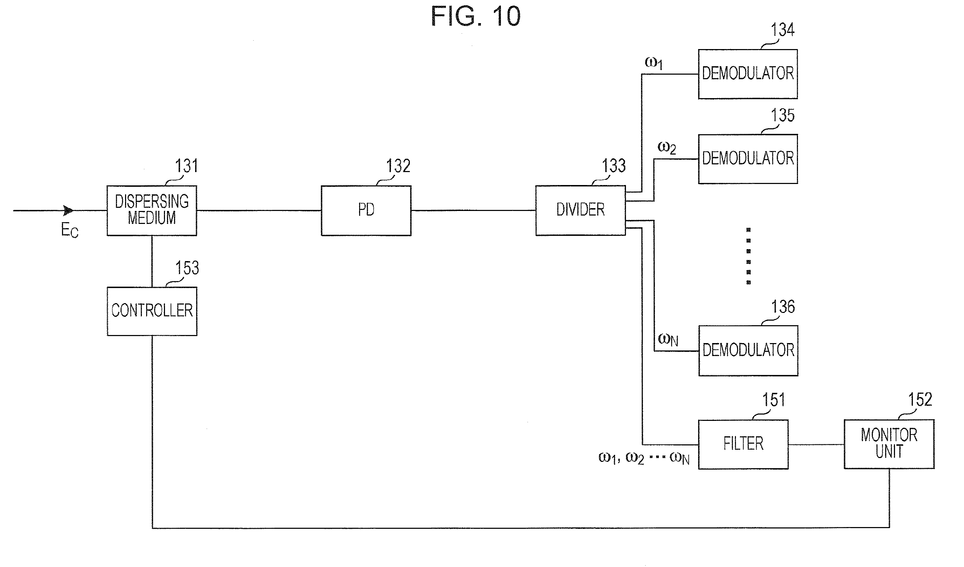

FIG. 10 is a diagram illustrating an optical reception apparatus according to the third embodiment. In FIG. 10, components the same as those illustrated in FIG. 8 are denoted by reference numerals the same as those illustrated in FIG. 8, and descriptions thereof are omitted. A configuration of an optical reception apparatus 21 illustrated in FIG. 10 is different from that illustrated in FIG. 8 in that the optical reception apparatus 21 illustrated in FIG. 10 includes a filter 151, a monitor 152, and a controller 153.

To the filter 151, subcarrier modulation signals having subcarrier frequencies $\omega_1$ to $\omega_N$ which are output from the divider 133 are input. The filter 151 allows one or more subcarrier modulation signals having specific subcarrier frequency components to pass and outputs the subcarrier modulation signals to the monitor 152. Note that the filter 151 may allow all subcarrier modulation signals of all subcarrier frequency components to pass.

The monitor 152 monitors power of the subcarrier modulation signals output from the filter 151.

The controller 153 controls a dispersion characteristic of the dispersing medium 131 in accordance with a result of the monitoring performed by the monitor 152. For example, the controller 153 controls the dispersion characteristic of the dispersing medium 131 so that the power monitored by the monitor 152 becomes maximum. For example, the controller 153 controls a propagation coefficient $\beta$ of the chromatic dispersing medium, a polarization mode dispersion parameter $D_p$, of the birefringent medium, and a delay time of a delay interferometer to thereby maximize the power monitored by the monitor 152.

As described above, the optical reception apparatus 21 controls the dispersion characteristic of the dispersing medium 131 in accordance with the power of the electric signal output from the PD 132. By this, the optical reception apparatus 21 may improve sensitivity of reception of the data signals D1 to DN.

Note that the electric signal output from the PD 132 may be input to the filter 151.

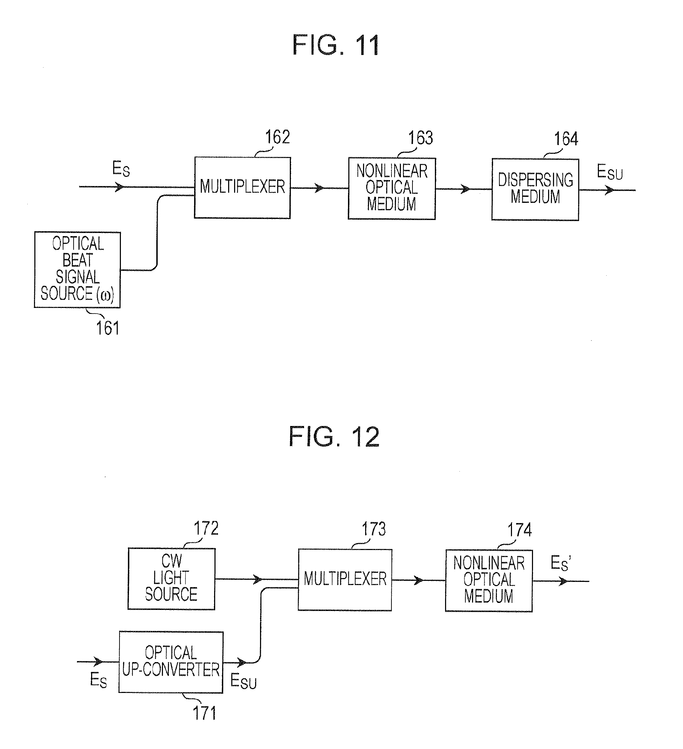

FIG. 11 is a diagram illustrating an optical up-converter which uses a dispersing medium similar to that of the optical reception apparatus. The optical up-converter illustrated in FIG. 11 includes an optical beat signal source 161, a multiplexer 162, a nonlinear optical medium 163, and a dispersing medium 164. The dispersing medium 164 may be an optical filter.

The optical beat signal source 161 outputs two or more light beams having a frequency spacing $\omega$ therebetween. The multiplexer 162 multiplexes signal light $E_S$ supplied from an optical transmission apparatus with an optical beat signal output from the optical beat signal source 161. The signal light $E_S$ multiplexed with the optical beat signal is supplied to the nonlinear optical medium 163.

The signal light $E_S$ input to the nonlinear optical medium 163 is subjected to optical cross-phase modulation using the optical beat signal and subjected to phase modulation using a frequency $\omega$ by the nonlinear optical medium 163. The signal light which has been subjected to the phase modulation using the frequency $\omega$ is input to an optical filter or the dispersing medium 164.

Furthermore, the optical cross-phase modulation performed by the nonlinear optical medium 163 may be replaced by electrical-optical phase modulation performed by the electrical-optical phase modulator using an oscillator of the frequency $\omega$.

The signal light $E_S$ input to the optical filter or the dispersing medium 164 is converted into an optical up-conversion signal $E_{SU}$ which has been subjected to intensity modulation using the frequency $\omega$.

FIG. 12 is a block diagram illustrating a chirpless signal generation apparatus using the optical up-converter of FIG. 11. The chirpless signal generation apparatus of FIG. 12 generates frequency-chirpless signal light from signal light which has frequency chirp, and includes an optical up-converter 171, a CW light source 172, a multiplexer 173, and a nonlinear optical medium 174.

The signal light $E_S$ is converted into an optical up-conversion signal $E_{SU}$ by the optical up-converter 171 of the frequency $\omega$.

The CW light source 172 outputs CW light having a wavelength different from that of the optical up-conversion signal $E_{SU}$.

The multiplexer 173 multiplexes the CW light output from the CW light source 172 with the optical up-conversion signal $E_{SU}$ output from the optical up-converter 171. The CW light $E_S$ multiplexed with the optical up-conversion signal $E_{SU}$ is supplied to the nonlinear optical medium 174.

The CW light input to the nonlinear optical medium 174 is subjected to optical cross-phase modulation performed by the nonlinear optical medium 174 using the optical up-conversion signal $E_{SU}$ and becomes an optical subcarrier modulation signal $E_S$ having a frequency $\omega$. Here, since frequency chirp of signal light is not associated with the optical cross-phase modulation performed by the nonlinear optical medium 174, the optical subcarrier modulation signal $E_S'$ does not have the frequency chirp.

The divider 133 of this specification may be replaced by a DFT (Discrete Fourier Transformation) unit.

**Claims**

1. An optical apparatus, comprising:

   a dispersing medium configured to receive carrier light which has been subjected to phase modulation in accordance with subcarrier modulation signals which has been modulated using data signals; and
   an extracting means configured to extract the data signals from light output from the dispersing medium.

**2.** The optical apparatus according to Claim 1,
wherein the extracting means includes
a converting means configured to convert the light output from the dispersing medium into electric signals,
a dividing means configured to divide the electric signals output from the converter according to subcarrier frequencies, and
a demodulating means configured to demodulate an electric signal divided by the dividing means.

**3.** The optical apparatus according to Claim 2, further comprising:

a control means configured to control a dispersion characteristic of the dispersing medium in accordance with electric power of the electric signal output from the converting means.

**4.** The optical apparatus according to any one of Claims 1 to 3,
wherein the dispersing medium is one of a chromatic dispersing medium, a multi-mode waveguide, and a delay interferometer.

**5.** The optical apparatus according to any one of Claims 1 to 4,
wherein the carrier light is multiplexed with optical subcarrier modulation signals which have been subjected to optical modulation using the subcarrier modulation signals and is subjected to phase modulation performed by nonlinear optical effect in a transmission path.

**6.** The optical apparatus according to any one of Claims 1 to 4,
wherein the carrier light is supplied to an external modulator and is subjected to phase modulation using the subcarrier modulation signals which are the electric signals.

**7.** An optical network system, comprising:

a transmission path configured to propagate carrier light;
an optical multiplexing apparatus configured to perform phase modulation on the carrier light in accordance with subcarrier modulation signals modulated using data signals;
an optical apparatus configured to receive the carrier light which has been subjected to the phase modulation and extract the data signals; and
a dispersing medium which receives and outputs the carrier light which has been subjected to the phase modulation is disposed in the transmission path on one side or both sides of the optical apparatus.

**8.** An optical apparatus, comprising:

a beat signal source;
a dispersion medium; and
an optical up-converter configured to generate an optical cross-phase modulation on signal light which has been subjected to baseband modulation by nonlinear optical effect using an optical beat signal provided by the beat signal source and inputs the signal light to the dispersing medium so as to convert the signal light into an optical up-conversion signal.

**9.** The optical apparatus according to Claim 8, wherein
the optical up-converter converts signal light having frequency chirp into an optical up-conversion signal and generates optical cross-phase modulation on continuous wave light using the optical up-conversion signal so as to generate frequency-chirpless signal light.

FIG. 1

EP 2 575 277 A2

FIG. 2

# FIG. 3

# FIG. 4

# FIG. 5

EP 2 575 277 A2

# FIG. 6

EP 2 575 277 A2

FIG. 7A

FIG. 7B

EP 2 575 277 A2

FIG. 7C

# FIG. 7D

FIG. 7E

# FIG. 8

EP 2 575 277 A2

# FIG. 9

EP 2 575 277 A2

FIG. 10

DISPERSING MEDIUM 131

$E_C$

PD 132

DIVIDER 133

DEMODULATOR 134 — $\omega_1$

DEMODULATOR 135 — $\omega_2$

. . . . . .

DEMODULATOR 136 — $\omega_N$

FILTER 151 — $\omega_1, \omega_2 \cdots \omega_N$

MONITOR UNIT 152

CONTROLLER 153

# FIG. 11

```
        162              163             164
E_S   ┌──────────┐    ┌──────────┐    ┌──────────┐   E_SU
─────▶│MULTIPLEXER│──▶│ NONLINEAR │──▶│ DISPERSING│────▶
      │          │    │  OPTICAL  │    │  MEDIUM   │
      └──────────┘    │  MEDIUM   │    └──────────┘
        ▲             └──────────┘
      ┌──────────┐
      │ OPTICAL  │
      │  BEAT    │
      │ SIGNAL   │
      │SOURCE (ω)│
      └──────────┘
         161
```

# FIG. 12

```
        172              173             174
      ┌──────────┐    ┌──────────┐    ┌──────────┐   E_S'
      │   CW     │──▶ │MULTIPLEXER│──▶│ NONLINEAR │────▶
      │  LIGHT   │    │          │    │  OPTICAL  │
      │ SOURCE   │    └──────────┘    │  MEDIUM   │
      └──────────┘       ▲            └──────────┘
      ┌──────────┐
 E_S  │ OPTICAL  │ E_SU
─────▶│UP-CONVERTER│─▶
      └──────────┘
         171
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3436310 B